# EUROPEAN PATENT APPLICATION

(11) **EP 2 963 760 A1**
(43) Date of publication of application: **06.01.2016**
(21) Application number: 14174913.5
(22) Date of filing: 30.06.2014
(51) Int. Cl.: H02J 3/38, H02J 1/00

(54) **Ground potential equalization for photovoltaic power generation system**

(71) Applicant: SMA Solar Technology AG, 34266 Niestetal (DE)
(72) Inventor: Kjær, Søren Bækhøj, 24955 Harrislee (DE)
(74) Representative: Lahnor, Peter

(57) **Abstract**

The present disclosure provides a voltage equalization device (200) fitted in a photovoltaic power generation system (110). The photovoltaic power generation system comprises a photovoltaic array (112) and a non-galvanically isolated inverter (114) and can be coupled to or decoupled from a power distribution network (130) by an output switch (120). The voltage equalization device (200) comprises a variable discharging device (230). The resistance of the variable discharging device is controlled to enable the reduction of a floating voltage across the output switch (120), before the output switch is operated to couple the photovoltaic power generation system (110) to the power distribution network (130). The present disclosure also provides a photovoltaic system and a voltage equalization method for use in the photovoltaic system.

## Description

The present disclosure generally relates to the technical field of photovoltaic technology, and particularly, to ground potential equalization for a photovoltaic power generation system before it is connected to a grid.

As awareness of environmental protection and sustainable development increases, photovoltaic systems have gained more and more attention.

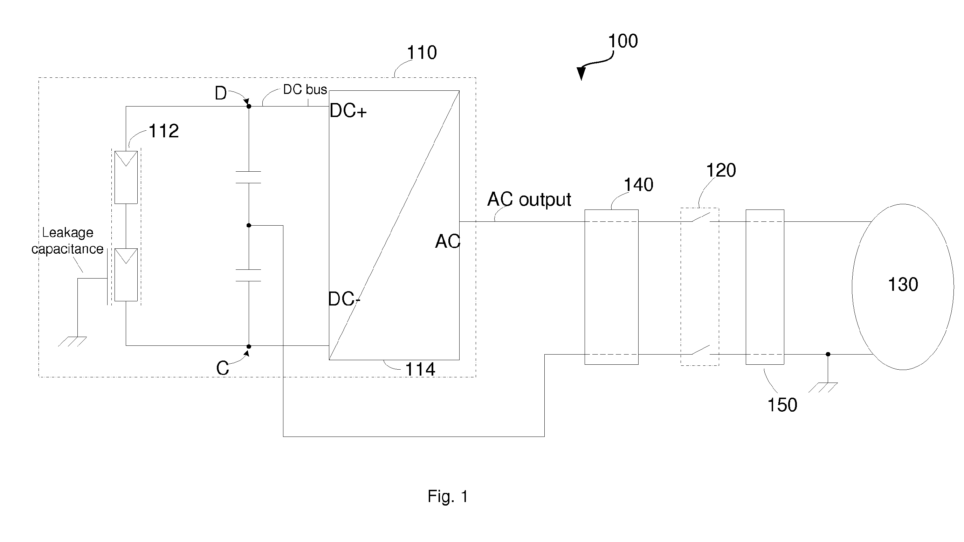

A typical, simplified, schematic diagram of a photovoltaic system 100 is shown in figure 1. On the left of the figure, there is illustrated a photovoltaic array 112 which is operable to generate DC power when subjected to light radiation. Here, the photovoltaic array 112 is shown with two photovoltaic modules in series forming a photovoltaic string. Those skilled in the art will appreciate that such a photovoltaic array may also comprise another number of photovoltaic modules in series and/or one or more strings of such photovoltaic modules connected in parallel. Such arrays are well known within the field.

The power generated by the photovoltaic array 112 appears as a voltage across the DC bus and a current through the DC terminals of an inverter 114. A neutral point is formed between two DC bus capacitors. The inverter 114 shown here is a non-galvanically isolated inverter, where voltages appearing on one side may influence the voltages on the other. For example, a DC voltage to ground seen at the AC side may influence the voltage of the DC input to ground.

The inverter 114 shown here converts the DC appearing at the DC inputs to an AC signal at the AC output relative to the neutral, and the AC signal is then fed into a power distribution network 130 when the photovoltaic power generation system 110 including the photovoltaic array 112 and the inverter 114 is in operation. A residual current monitoring unit (RCMU) 140 is shown on the AC side of the inverter 114, and between the inverter 114 and the power distribution network 130. Also shown is an output switch 120 which is used to isolate the photovoltaic power generation system 110 when maintenance is required or when power is not being generated. It is often the case that such a power generation facility is taken off-line by using the output switch during the night when power is not been produced. A residual current device (RCD) 150 may, alternatively, be mounted on the network side of the output switch 120.

When the photovoltaic power generation system 110 is off-line, for example at night, and the output switch 120 is open, the photovoltaic array 112 and inverter 114 in effect "float" relative to ground, and the potential may drift for various reasons above or below ground potential. Particularly when the photovoltaic panels are wet (for example due to rain), a significant capacitance exists between them and ground as is shown by the "leakage capacitance" to ground in figure 1. The floating voltage will appear across the open output switch 120. When the output switch 120 is closed in such a condition (for example at the end of the night when the photovoltaic power generation system 110 is to start generating power), it is sometimes the case that a transient current flows to discharge the charge held in the leakage capacitance due to the floating potential relative to ground. This transient current can sometimes trip the RCMU 140 or RCD 150. Such tripping is a disadvantage, because it interrupts the normal functioning of the photovoltaic system 100. In particular, it is a disadvantage if the transient current trips the RCD 150, since this will require a manual reset.

In view of the foregoing, there is a need to eliminate or alleviate the above-described disadvantage.

According to a first aspect of the present disclosure, there is provided a voltage equalization device fitted in a photovoltaic power generation system. The photovoltaic power generation system comprises a photovoltaic array and a non-galvanically isolated inverter and can be coupled to or decoupled from a power distribution network by an output switch. The output switch may comprise a manually operated mechanical switch, but it may preferably be a relay, contact, breaker or suchlike, where the opening and/or closing of the electrical circuit may be controlled remotely by, for example, by the use of an electrical current through a magnetic coil. The voltage equalization device comprises a variable discharging device. The resistance of the variable discharging device is controlled to enable the reduction of a floating voltage across the output switch, before the output switch is operated to couple the photovoltaic power generation system to the power distribution network.

In an embodiment, the variable discharging device comprises a resistor and a discharge switch connected in series with the resistor. The discharge switch is operated with an adjusted duty cycle to control the average resistance of the variable electrical resistance. The variable discharging device may, in other embodiments, comprise an LR circuit, or another configurations suitable for controlling the rate of discharge, or the impedance characteristics of the circuit.

In an embodiment, the voltage equalization device may be reused for detecting isolation faults in the photovoltaic array. The discharge switch may be a mechanical switch or an electronic switch. The electronic switch may be an IGBT (Insulated-gate bipolar transistor), a MOSFET (metal-oxide-semiconductor field-effect transistor), a BJT (Bipolar junction transistor) or other suitable switching device.

According to a second aspect of the present disclosure, there is provided a photovoltaic system comprising a photovoltaic power generation system, an output switch and one or two voltage equalization devices according to the first aspect of the present disclosure. The photovoltaic array is operable to generate DC power when subjected to light radiation. The non-galvanically isolated inverter is operable to convert the DC power generated by the photovoltaic array to AC power. The output switch is operable to couple the photovoltaic power generation system to a power distribution network or decouple the photovoltaic power generation system from the power distribution network. The one or two voltage equalization devices are fitted in the photovoltaic generation system and operable to reduce a floating voltage across the output switch to zero before the output switch is operated to couple the photovoltaic power generation system to the power distribution network.

In an embodiment, the photovoltaic array may be directly coupled to the non-galvanically isolated inverter. In this case, if there is only one voltage equalization device, the voltage equalization device may be coupled between either of a pair of connections, which connect the photovoltaic array and the non-galvanically isolated inverter, and a ground. If there are two voltage equalization devices, each of the voltage equalization devices may be coupled between a respective one of the pair of connections and the ground.

In an embodiment, the photovoltaic array may be indirectly coupled to the non-galvanically isolated inverter through a voltage changing device. Such a voltage changing device may be a boost converter circuit or a buck converter circuit or another electronic circuit capable of changing the ratio between its DC input voltage and the DC output voltage. If there is only one voltage equalization device, the voltage equalization device may be coupled between either of a first pair of connections or either of a second pair of connections and a ground, wherein the first pair of connections connect the photovoltaic array and the voltage changing device and the second pair of connections connect the voltage changing device and the non-galvanically isolated inverter. If there are two voltage equalization devices, each of the voltage equalization devices may be coupled between a respective one of the first pair of connections or a respective one of the second pair of connections and a ground.

According to a third aspect of the present disclosure, there is provided a voltage equalization method for use in a photovoltaic system according to the second aspect of the present disclosure. The method comprises: measuring a floating voltage across the output switch before the output switch is operated to couple the photovoltaic power generation system to the power distribution network; and adjusting a duty cycle of the discharge switch of each of the voltage equalization devices to reduce the measured floating voltage to zero.

The above and other objects, features, and advantages of the present disclosure will become apparent from the following descriptions on embodiments of the present disclosure with reference to the drawings, in which:
- Fig. 1: is a schematic diagram of a photovoltaic system;
- Fig. 2: is a schematic diagram of a voltage equalization device for use in a photovoltaic system according to the present disclosure;
- Fig. 3: is a flowchart illustrating a voltage equalization method according to the present disclosure; and
- Fig. 4: is a schematic diagram of an alternative photovoltaic system where the voltage equalization device illustrated in figure 2 may be used.

In the discussion that follows, specific details of particular embodiments of the present techniques are set forth for purposes of explanation and not limitation. It will be appreciated by those skilled in the art that other embodiments may be employed apart from these specific details. Furthermore, in some instances detailed descriptions of well-known circuits and devices are omitted so as not obscure the description with unnecessary detail. Throughout the description and figures, like reference numerals and characters, unless otherwise stated, are used to denote like features, elements, components or portions of the illustrated embodiments.

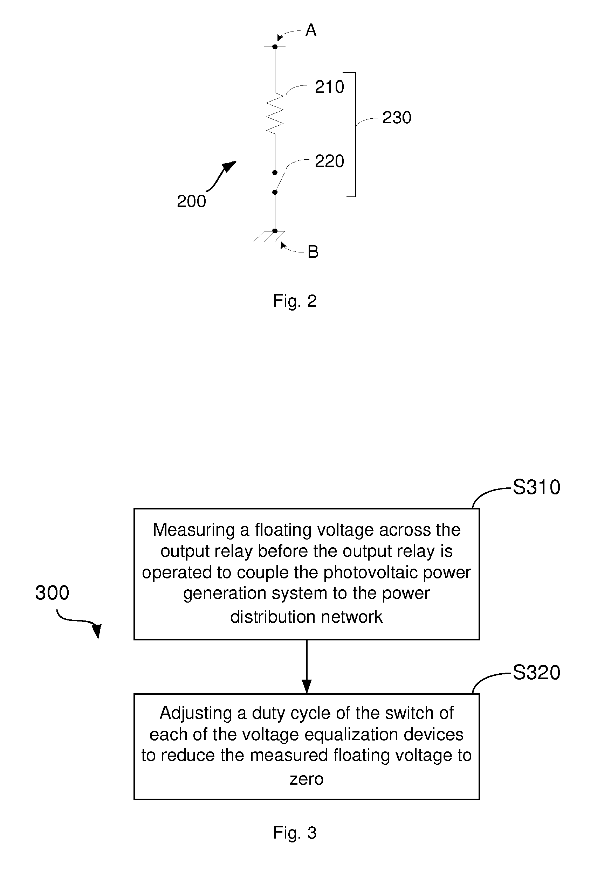

Now, reference will be made to figure 2 for illustrating a voltage equalization device 200 which is designed to be fitted in the photovoltaic power generation system 110 in Figure 1 for counteracting the floating potential of the system before it is taken on-line and thus avoiding tripping of the RCMU or RCD due to the floating potential.

As illustrated, the voltage equalization device 200 comprises a resistor 210 and a discharge switch 220. The discharge switch 210 may comprise a mechanical switch, but it is an advantage if the discharge switch is an electronic switch, such as an IGBT, a MOSFET, a BJT or any other type of controllable silicon device. Closing the discharge switch 220 connects a circuit including the resistor 210 from point A to a ground connection B. The variable discharging device may, in other embodiments (not illustrated), comprise an LR circuit, or another configurations suitable for controlling the rate of discharge, or the impedance characteristics of the circuit.

In one embodiment, the voltage equalization device 200 may be connected to the negative side of the DC bus at point C in figure 1.

To utilize this voltage equalization device, a method 300 shown in Fig. 3 may be performed. As illustrated, the method 300 begins with step s310, at which a measurement of the voltage across the open output switch is made. Then, it proceeds to step s320, at which the discharge switch is operated at an adjusted duty cycle to reduce that measured voltage to zero before the switch is closed. By changing the duty cycle of the switching of the discharge switch, the voltage at point A can be set between its quiescent value and the voltage of ground B. Because of the non-galvanically isolated inverter, such voltage changes on one side of the DC bus will be reflected in changes of the potential of one or more of the output switch contacts, and thus can change the potential across the open output switch.

This solution is a great advantage, because it is often the case that no extra components are required to be fitted to the equipment, and utilizing the method is enabled merely by changes in software. This is the case because such a voltage equalization device may already be used in such photovoltaic generation systems as a means for detecting isolation faults in the photovoltaic array.

The voltage equalization device 200 alternatively may be connected to the other side of the DC bus, such as point D in figure 1. In another alternative embodiment, the voltage equalization device 200 may be connected to a point on the electrical connection between the two capacitors. It is also advantageous to use two voltage equalization devices: one connected to the negative side of the DC bus (such as point C), and one to the positive side of the DC bus (such as point D). In this way, by controlling the duty cycle of each of these voltage equalization devices, the range of the control is increased. Thus, it is possible to reduce the potential to ground of either side of the DC bus close to zero and thereby avoid trips at start-up.

An alternative embodiment (not shown) is also possible in which the circuit is similar to that shown in figure 1, but in which there is no neutral line connected between the two DC bus capacitors, and in which the inverter 114 converts the DC appearing at the DC inputs to an AC signal at the AC output relative to ground. In such an embodiment, the voltage equalization device 200 may be connected to the point C, as described above, or alternative to the point D, also as described above.

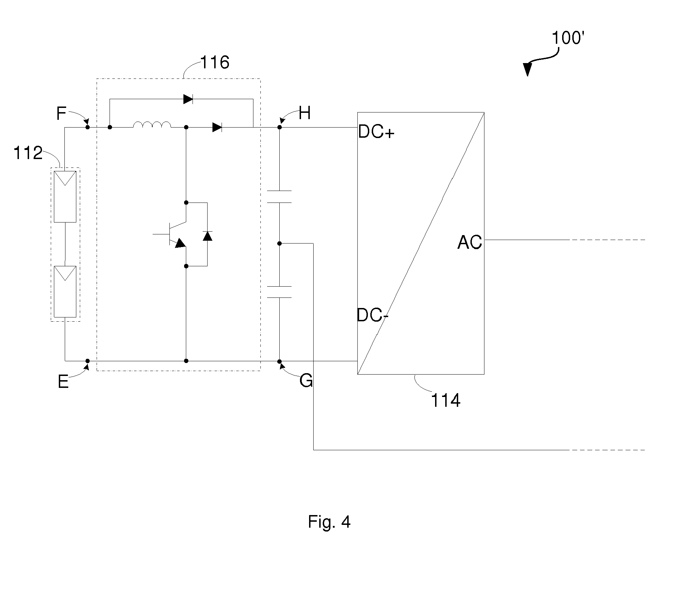

Figure 4 illustrates an alternative photovoltaic system 100' where the photovoltaic array 112 is coupled to the inverter 114 through a booster 116 instead of being coupled directly to the inverter 114. For the sake of simplicity, the remaining components of the system 100' which are the same as those of the system 100 are omitted.

The booster 116 changes the voltage available from the output of the PV array 112 to another voltage at the DC inputs of the inverter 114. Alternative forms of such circuits can either raise or lower the voltage ratio between the PV array outputs and the inverter DC inputs. This type of voltage changing circuit is well known in the art.

In an embodiment, the above-described voltage equalization device may be connected to point E (as in one of the previous embodiments) or to point F on the PV side of the booster circuit.

A still further embodiment would be to have two voltage equalization devices: one connected to point E and the other to point F in figure 4, that is, between the PV array 112 and the booster circuit 116.

A still further embodiment would be again to have two voltage equalization devices: one connected to point G and the other to point H in figure 4, that is, between the booster circuit 116 and the DC inputs of the inverter 120.

Those skilled in the art will be aware that the use of voltage equalization devices as described above is also suitable for use in multiphase inverter systems (such as three-phase systems commonly used).

The present disclosure is described above with reference to the embodiments thereof. However, those embodiments are provided just for illustrative purpose, rather than limiting the present disclosure. The scope of the disclosure is defined by the attached claims as well as equivalents thereof. Those skilled in the art can make various alternations and modifications without departing from the scope of the disclosure, which all fall into the scope of the disclosure.

## Claims

1. A voltage equalization device (200) fitted in a photovoltaic power generation system (110) which comprises a photovoltaic array (112) and a non-galvanically isolated inverter (114) and can be coupled to or decoupled from a power distribution network (130) by an output switch (120), the voltage equalization device (200) comprising a variable discharging device (230), wherein the average resistance of the variable discharging device (230) is controlled to enable the reduction of a floating voltage across the output switch (120), before the output switch (120) is operated to couple the photovoltaic power generation system (110) to the power distribution network (130).

2. The device (200) of claim 1, wherein the variable discharging device (230) comprises a resistor (210); and a discharge switch (220) connected in series with the resistor (210), wherein the discharge switch (220) is operated with an adjusted duty cycle to control the average resistance of the variable discharging device (230).

3. The device (200) of claim 1 or 2, wherein the voltage equalization device (200) is reused for detecting isolation faults in the photovoltaic array.

4. The device (200) of any of claims 1-3, wherein the discharge switch (220) is a mechanical switch or an electronic switch.

5. The device (200) of any of claims 1-4, wherein the electronic switch is an IGBT, a MOSFET or a BJT.

6. A photovoltaic system (100, 100'), comprising: a photovoltaic power generation system (110), which comprises a photovoltaic array (112) operable to generate DC power when subjected to light radiation, and a non-galvanically isolated inverter (114) operable to convert the DC power generated by the photovoltaic array to AC power; and an output switch (120) operable to couple the photovoltaic power generation system (110) to a power distribution network (130) or decouple the photovoltaic power generation system (110) from the power distribution network (130); and one or two voltage equalization devices (200) according to any of claims 1-5, which are fitted in the photovoltaic power generation system (110) and operable to reduce a floating voltage across the output switch (120) to zero before the output switch (120) is operated to couple the photovoltaic power generation system (110) to the power distribution network (130).

7. The system (100) of claim 6, wherein the photovoltaic array (112) is directly coupled to the non-galvanically isolated inverter (114).

8. The system (100) of claim 7, wherein if there is only one voltage equalization device (200), the voltage equalization device (200) is coupled between either of a pair of connections, which connect the photovoltaic array (112) and the non-galvanically isolated inverter (114), and a ground; and if there are two voltage equalization devices (200), each of the voltage equalization devices (200) is coupled between a respective one of the pair of connections and the ground.

9. The system (100') of claim 6, wherein the photovoltaic array (112) is indirectly coupled to the non-galvanically isolated inverter (114) through a voltage changing device (116).

10. The system (100') of claim 9, wherein if there is only one voltage equalization device (200), the voltage equalization device (200) is coupled between either of a first pair of connections or either of a second pair of connections and a ground, wherein the first pair of connections connect the photovoltaic array (112) and the voltage changing device (116) and the second pair of connections connect the voltage changing device (116) and the non-galvanically isolated inverter (114); and if there are two voltage equalization devices (200), each of the voltage equalization devices (200) is coupled between a respective one of the first pair of connections or a respective one of the second pair of connections and a ground.

11. A voltage equalization method (300) for use in a photovoltaic system (100, 100') according to any of claims 6-10, the method comprising: measuring (s310) a floating voltage across the output switch (120) before the output switch (120) is operated to couple the photovoltaic power generation system (110) to the power distribution network (130); and adjusting (s320) a duty cycle of the discharge switch (220) of each of the voltage equalization devices (200) to reduce the measured floating voltage to zero.
